(19) Europäisches Patentamt / European Patent Office / Office européen des brevets

(11) **EP 4 242 890 B1**

(12) **EUROPÄISCHE PATENTSCHRIFT**

(45) Veröffentlichungstag und Bekanntmachung des Hinweises auf die Patenterteilung:
**15.01.2025   Patentblatt 2025/03**

(21) Anmeldenummer: **23157981.4**

(22) Anmeldetag: **22.02.2023**

(51) Internationale Patentklassifikation (IPC):
**G06F 21/34** *(2013.01)*       **H04L 9/32** *(2006.01)*
**H04L 9/08** *(2006.01)*       **G06F 21/33** *(2013.01)*
**G06F 21/44** *(2013.01)*       **G06F 21/62** *(2013.01)*

(52) Gemeinsame Patentklassifikation (CPC):
**H04L 9/3273; G06F 21/33; G06F 21/34;
G06F 21/445; G06F 21/6245; H04L 9/0838;
H04L 9/3247; H04L 9/3263;** G06F 2221/2129

(54) **VERFAHREN ZUR SICHEREN IDENTIFIZIERUNG EINER PERSON DURCH EINE VERIFIKATIONSINSTANZ**

METHOD FOR SECURE IDENTIFICATION OF A PERSON BY A VERIFICATION INSTANCE

PROCÉDÉ D'IDENTIFICATION SÉCURISÉE D'UNE PERSONNE PAR UNE INSTANCE DE VÉRIFICATION

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität:  **11.03.2022   DE 102022000857**

(43) Veröffentlichungstag der Anmeldung:
**13.09.2023   Patentblatt 2023/37**

(73) Patentinhaber: **Veridos GmbH
10969 Berlin (DE)**

(72) Erfinder: **Genchev, Stefan
85748 Garching (DE)**

(74) Vertreter: **Zeuner Summerer Stütz
Patent- und Rechtsanwälte
Partnerschaft
Nußbaumstraße 8
80336 München (DE)**

(56) Entgegenhaltungen:
WO-A1-2012/163970       DE-A1- 102013 113 666
US-A1- 2008 235 513

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren für eine sichere, die Privatsphäre schützende Remote-Identifizierung einer Person anhand einer Identifikationskarte durch einen externen Identifizierungsanbieter, und betrifft in diesem Zusammenhang insbesondere ein Verfahren zur sicheren Identifizierung einer Person mit einer Identifikationskarte durch eine Verifikationsinstanz gegenüber einem Diensteanbieter.

Herkömmliche zentrale Identifizierungslösungen verfolgen ein klassisches Diensteanbieter /Identifizierungsanbieter-Konzept, bei dem eine zentrale Stelle die Identität einer Person bestätigt und einen entsprechenden Nachweis an den Diensteanbieter weiterleitet. Bei solchen zentralen Identifizierungslösungen ist allerdings ein Tracking von Aktivitäten im Internet nicht ausgeschlossen, da eine Historie von Identifizierungen pro Person erstellt werden kann.

Bei dezentralen, zertifikatsbasierten Identifizierungslösungen gibt es keine solche zentrale Instanz, allerdings müssen dann die Diensteanbieter zusätzlich die Überprüfung der Gültigkeit und des Status des Zertifikats übernehmen. Dabei ist ein anbieterübergreifendes Tracking möglich, da die Seriennummern der Zertifikate eindeutig sein sollen. Außerdem erhalten Diensteanbieter unter Umständen aus dem Zertifikat für sie nicht relevante Personendaten, was Datenminimierungszielen widerspricht.

Bei der deutschen eID-Lösung, die auf Extended Access Control (EAC) basiert, ist eine dezentrale Identifizierung von Personen möglich, ohne dass nicht angefragte Daten dem Diensteanbieter übermittelt werden und ohne dass ein anbieterübergreifendes Tracking möglich ist. Eine Schwäche dieses Ansatzes besteht allerdings darin, dass alle relevanten Kommunikations- und Sicherheitsprotokolle vom Diensteanbieter implementiert werden müssen. Die Protokolle weisen jedoch eine hohe Komplexität auf und zeichnen sich daher durch eine komplizierte Handhabung aus. Darüber hinaus ist der Identifizierungsprozess fehleranfällig und es besteht die Gefahr, dass wichtige Überprüfungen ausgelassen werden.

Das Dokument US 2008/235513 A1 offenbart ein Verfahren, wobei ein Vertrauensanbieter etablierte Beziehungen mit einer Client-Vorrichtung und einem Server eines E-Commerce-Händlers oder Dienstanbieters verwendet, um die Identität von jedem zu dem anderen sicherzustellen.

Aus diesen Gründen werden oft spezialisierte Identifizierungsanbieter eingesetzt, die alle technischen Tätigkeiten im Rahmen der Identifizierung übernehmen. Dies kann allerdings ebenfalls problematisch sein, da im eID-System keine technischen Maßnahmen vorgesehen sind, die die Identifizierungsanbieter daran hindern, Personendaten zu speichern und die Datensätze von mehreren Diensteanbietern zu kombinieren. Da technische Maßnahmen fehlen, müssen Anforderungen an die Organisation des Identifizierungsprozesses definiert werden. Werden diese zu hoch angesetzt, besteht die Gefahr, dass sich nur wenige Anbieter als Identifizierungsanbieter qualifizieren. Dadurch kann das System zu einem fast zentralisierten System mit einigen wenigen Angriffszielen entarten und die ursprünglichen Ziele können nicht mehr garantiert werden. Ein weiterer Nachteil besteht darin, dass, wenn kein externer Identifizierungsanbieter eingesetzt wird, dem Diensteanbieter kein Nachweis über eine stattgefundene Identifizierung verbleibt, so dass diese nachträglich abgestritten werden kann.

Davon ausgehend liegt der Erfindung die Aufgabe zugrunde, ein sicheres Delegieren bestimmter Tätigkeiten im Rahmen der Identifizierung einer Person zu ermöglichen. Insbesondere soll ein Verfahren angegeben werden, das eine sichere Einbeziehung externer Anbieter zur Durchführung von sicheren, die Privatsphäre schützenden Remote-Identifizierungen von Personen unter Wiederverwendung bestehender Software-Komponente und -systeme erlaubt.

Diese Aufgabe wird durch die Merkmale der unabhängigen Ansprüche gelöst. Weiterbildungen der Erfindung sind Gegenstand der abhängigen Ansprüche.

Die Erfindung stellt ein Verfahren zur sicheren Identifizierung einer Person mit einer Identifikationskarte durch eine Verifikationsinstanz gegenüber einem Diensteanbieter bereit. Bei dem Verfahren ist vorgesehen, dass eine sichere, einseitig authentifizierte Kommunikationsverbindung zwischen der Identifikationskarte und dem Diensteanbieter aufgebaut wird, und dass eine sichere, gegenseitig authentifizierte Kommunikationsverbindung zwischen dem Diensteanbieter und der Verifikationsinstanz aufgebaut wird.

Die Kommunikation zwischen der Identifikationskarte und der Verifikationsinstanz wird bei dem Verfahren ausschließlich über den Diensteanbieter als Proxy durchgeführt. Der Diensteanbieter fängt alle zwischen der Identifikationskarte und der Verifikationsinstanz ausgetauschten Nachrichten ab und leitet sie mit eigener Kennung weiter, so dass ein logischer Kommunikationskanal zwischen der Identifikationskarte und der Verifikationsinstanz entsteht.

Über den logischen Kommunikationskanal wird eine erste, authentifizierte Schlüsselvereinbarung für eine verschlüsselte Kommunikation zwischen der Verifikationsinstanz und der Identifikationskarte durchgeführt. Von der Verifikationsinstanz wird dann mit dem ersten Schlüsselmaterial verschlüsselt über den logischen Kommunikationskanal die Gültigkeit der Identifikationskarte verifiziert.

Weiter wird zwischen dem Diensteanbieter und der Identifikationskarte eine zweite, authentifizierte Schlüsselvereinbarung für die Verschlüsselung und Authentisierung von benötigten Identifikationsdaten und/oder von Resultaten von Kartenoperationen durchgeführt. Die benötigten Identifikationsdaten werden dann von der Identifikationskarte mit dem zweiten Schlüsselmaterial verschlüsselt und die so verschlüsselten Daten werden dann mit dem ersten Schlüsselmaterial verschlüsselt über den logischen Kommunikationskanal an die Verifikationsinstanz übermittelt.

Die Verifikationsinstanz übermittelt dann die mit dem zweiten Schlüsselmaterial verschlüsselten Identifikationsdaten an den Diensteanbieter und bestätigt diesem, dass die in der Übermittlung enthaltenen Identifikationsdaten von einer von der Verifikationsinstanz erfolgreich auf Gültigkeit geprüften Identifikationskarte stammen. Der Diensteanbieter entschlüsselt schließlich die von der Verifikationsinstanz übermittelten Identifikationsdaten mit dem zweiten Schlüsselmaterial.

Der Diensteanbieter verfügt nach Durchführung des Verfahrens über die für die Durchführung des Dienstes benötigten Identifikationsdaten der Person, ohne dass die Verifikationsinstanz im Rahmen der Verifizierung Zugang zu persönlichen Daten der Person erhalten hätte. Durch die Einrichtung des logischen Kommunikationskanals zwischen Identifizierungskarte und Verifikationsinstanz sieht Letztere keine Daten der Identifizierungskarte, die zur eindeutigen Identifizierung einer Person ("Fingerprinting") missbraucht werden könnten. Die vom Dienst benötigten Identifikationsdaten liegen der Verifikationsinstanz nur in einer mit dem zweiten Schlüsselmaterial verschlüsselten Form vor, und können von der Verifikationsinstanz nicht entschlüsselt werden, da das zweite Schlüsselmaterial auf einer Schlüsselvereinbarung zwischen der Identifizierungskarte und dem Diensteanbieter beruht.

Da Verschlüsselung im Rahmen der vorliegenden Erfindung fast immer zusammen mit einer Authentisierung durchgeführt wird, schließt der Begriff "verschlüsselt" in der Regel auch eine Authentisierung mit ein.

In einer bevorzugten Ausgestaltung setzt das Verfahren Protokolle der Erweiterten Zugangskontrolle (Extended Access Control, EAC) ein, insbesondere Chip Authentication, Terminal Authentication und/ oder PACE (Password Authenticated Connection Establishment). Das Verfahren kann damit auf formal überprüfte Protokolle mit sicheren kryptographischen Primitiven zurückgreifen. Eine bereits bestehende EAC-Infrastruktur kann als Grundgerüst beibehalten werden, die bestehenden Software-Komponenten müssen lediglich um die in dieser Anmeldung beschriebenen, erweiterten Funktionalitäten ergänzt werden.

Die Verwendung der genannten EAC-Protokolle ermöglicht eine die Privatsphäre schützende Remote-Identifizierung des Inhabers der Identifikationskarte. Wie bereits erläutert, hat die Verifikationsinstanz keinen Zugang zu den persönlichen Daten der zu identifizierenden Person. Sie sieht lediglich die reinen Daten, die die Identifikationskarte übermittelt hat, jedoch keine Metadaten, die später hinzugefügt wurden und die für die EAC-Protokolle keine Bedeutung haben, wie etwa die IP-Adresse des Endgeräts, mit dem die Identifikationskarte der zu identifizierenden Person verbunden ist, oder andere Merkmale, die die Verifikationsinstanz für ein Fingerprinting missbrauchen könnte.

Bei einer vorteilhaften Verfahrensführung wird zur Durchführung der ersten Schlüsselvereinbarung eine Terminal Authentication mit der Verifikationsinstanz vorgenommen, und bei erfolgreicher Terminal Authentication wird eine Chip Authentication mit der Verifikationsinstanz vorgenommen.

Zur Durchführung der zweiten Schlüsselvereinbarung wird bei einer vorteilhaften Verfahrensführung eine Terminal Authentication mit dem Diensteanbieter vorgenommen, und bei erfolgreicher Terminal Authentication wird eine Chip Authentication mit dem Diensteanbieter vorgenommen.

Bei einer Weiterbildung des Verfahrens ist vorgesehen, dass der Diensteanbieter und die Identifikationskarte jeweils Belegdaten für die stattgefundene Identifizierung zwischenspeichern, dass die Identifikationskarte ihre Belegdaten an den Diensteanbieter übermittelt und dass der Diensteanbieter zur Authentisierung des Austausches die Übereinstimmung der von der Identifikationskarte übermittelten Belegdaten mit den ihm vorliegenden Belegdaten prüft. Wenn eine Übereinstimmung festgestellt wird, kann der Identifizierungsvorgang als erfolgreich abgeschlossen bewertet werden.

Die genannten Belegdaten enthalten vorteilhaft ein Berechtigungszertifikat des Diensteanbieters, einen statischen öffentlichen Schlüssel der Identifikationskarte, einen ephemeralen öffentlichen Schlüssel des Diensteanbieters und/oder die Inhalte der übermittelten Identifikationsdaten. Insbesondere können die Belegdaten alle genannten Informationen enthalten.

Bei einer vorteilhaften Weiterbildung der Erfindung ist vorgesehen, dass die Verifikationsinstanz mittels Restricted Identification den Status der Identifikationskarte prüft.

Vorteilhaft ist die Identifikationskarte eine eID-Karte. Die Identifikationskarte kann in einem Endgerät, beispielsweise einem Laptop oder Smartphone integriert sein, beispielsweise in einem Secure Element. Die Identifikationskarte kann aber auch als eigenständiges System, beispielsweise in Form einer Chipkarte, ausgebildet sein, das über eine Leseeinrichtung mit einem Endgerät verbunden ist. In beiden Fällen führt vorteilhaft eine lokale Client-Software des Endgerätes die Person durch den Identifizierungsablauf und übernimmt die Kommunikation mit der Identifikationskarte.

Bei einer zweckmäßigen Verfahrensführung ist vorgesehen, dass der Diensteanbieter über ein von einem Aussteller der Identifikationskarte ausgestelltes Berechtigungszertifikat verfügt, das die vom Diensteanbieter auslesbaren Identifikationsdaten festlegt. Der Diensteanbieter übermittelt dieses Berechtigungszertifikat zu Beginn des Verfahrens an die Identifikationskarte, um die Zustimmung der Person zur Identifizierung einzuholen.

Weiter ist bei einer vorteilhaften Verfahrensführung vorgesehen, dass die Verifikationsinstanz über ein von einem Aussteller der Identifikationskarte ausgestelltes Berechtigungszertifikat verfügt, das das Auslesen persönlicher Daten ausschließt. Dieses Berechtigungszertifikat wird zu Beginn des Verfahrens an die Identifikationskarte übermittelt, insbesondere durch den Diensteanbieter zusammen mit dessen Berechtigungszertifikat, um die Zustimmung der Person zur Identifizierung unter Einbeziehung der Verifikationsinstanz einzuholen.

Bei dem beschriebenen Verfahren hinterlässt die Identifikationskarte unter der Annahme, dass mehrere tausend Karten denselben statischen Chip Authentication-Schlüssel besitzen, per Konstruktion bis zum Auslesen der Identifikationsdaten keine eindeutigen Merkmale, die auf eine Person oder eine kleine Gruppe von Personen zurückführen können. Da die Inhalte der Identifikationsdaten von der Verifikationsinstanz nicht entschlüsselt werden können, kann bei dem Verfahren kein Tracking der Nutzer der Identifikationskarten durchgeführt werden, so dass die Nutzer für die Verifikationsinstanz anonym bleiben.

Der Diensteanbieter kann im Rahmen des Verfahrens insbesondere folgende Aufgaben übernehmen: Weiterleiten von Nachrichten; Generieren von Schlüsseln für Berechtigungszertifikate, Signieren von Challenges; Entschlüsseln von Nachrichten (kein Secure Messaging); Durchführen einer normalen Schlüsselvereinbarung, Berechnen von Hash und MAC, und Prüfung von Signaturen einer einzigen Partei.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen.

Es zeigen:

Fig. 1     schematisch die physischen und logischen Verbindungen zwischen den an einem erfindungsgemäßen Verfahren beteiligten Parteien, und

Fig. 2     in (a) bis (k) schematisch den Ausgangszustand und aufeinanderfolgende Teilschritte eines bevorzugten Verfahren zur sicheren Identifizierung einer Person durch eine Verifikationsinstanz.

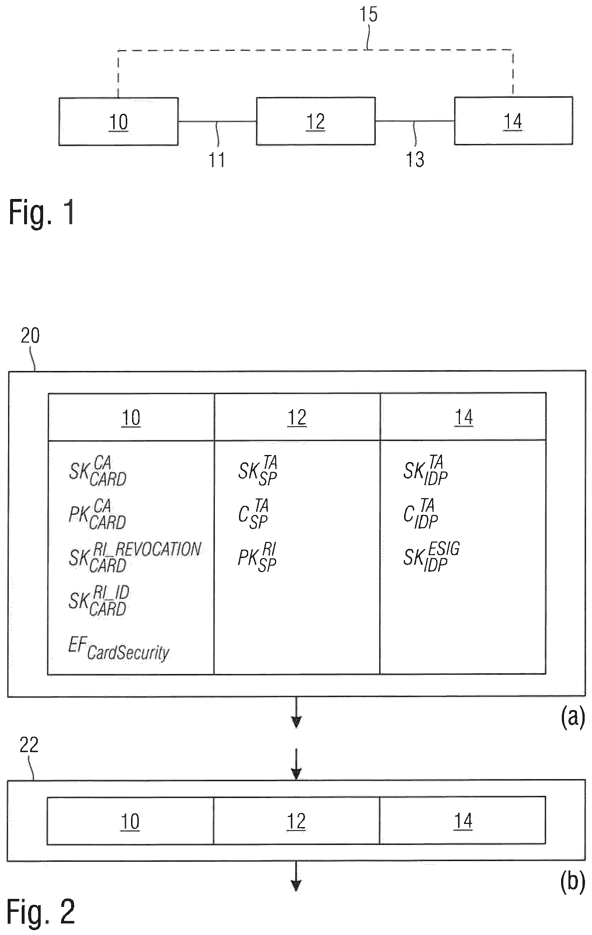

Figur 1 zeigt schematisch die Verbindungen zwischen den an einem erfindungsgemäßen Verfahren beteiligten Parteien, einer eID-Karte 10, einem Diensteanbieter 12 und einem Identifizierungsanbieter 14, der im Rahmen dieser Beschreibung auch als Verifikationsinstanz bezeichnet wird. Die eID-Karte 10 ist von einem nicht dargestellten Endgerät, beispielsweise einem Laptop oder einem Smartphone, ansprechbar. Die eID-Karte 10 kann in dem Endgerät integriert sein, etwas in einem Secure Element oder kann als eigenständiges System, beispielsweise in Form einer Chipkarte, über einen Kartenleser mit dem Gerät verbunden sein. In beiden Fällen befindet sich auf dem Endgerät eine lokale Client-Software, die die Karte 10 anspricht und den Nutzer bei der Identifizierung durch den nachfolgend beschriebenen Ablauf führt.

Zwischen der Karte 10 und dem Diensteanbieter 12 bzw. dem Diensteanbieter 12 und dem Identifizierungsanbieter 14 besteht bei dem Verfahren jeweils eine direkte Verbindung 11 bzw. 13, bei der die verbundenen Parteien in einem Kommunikationsprotokoll direkt adressierbar sind. Für die Kommunikation wird ein Protokoll zur Verschlüsselung von Daten während des Transports verwendet, beispielsweise TLS. Bei der Verbindung 11 ist lediglich der Diensteanbieter 12 authentifiziert, bei der Verbindung 13 ist sowohl der Diensteanbieter 12 als auch der Identifizierungsanbieter 14 authentifiziert.

Darüber hinaus wird bei dem Verfahren ein logischer Kommunikationskanal 15 zwischen der Karte 10 und dem Identifizierungsanbieter 14 bereitgestellt. Dieser entsteht dadurch, dass der Diensteanbieter 12 Nachrichten zwischen der Karte 10 und dem Identifizierungsanbieter 14 abfängt und jeweils mit seiner eigenen Kennung weiterleitet, so dass jeweils eine Partei die andere Partei über den Diensteanbieter 12 erreichen kann. Ein zusammenhängender Austausch von Nachrichten definiert dabei eine Identifizierungssitzung. Durch diese Vorgehensweise sieht der Identifizierungsserver 14 lediglich die reinen Daten, die die Karte 10 geschickt hat, jedoch keine Metadaten, die später hinzugefügt wurden und für das Extended Access Protocol keine Bedeutung haben, etwa die IP-Adresse des Endgeräts, mit dem die Karte 10 verbunden ist, oder andere Merkmale, die der Identifizierungsanbieter 14 missbrauchen könnte, um eine Person eindeutig zu identifizieren.

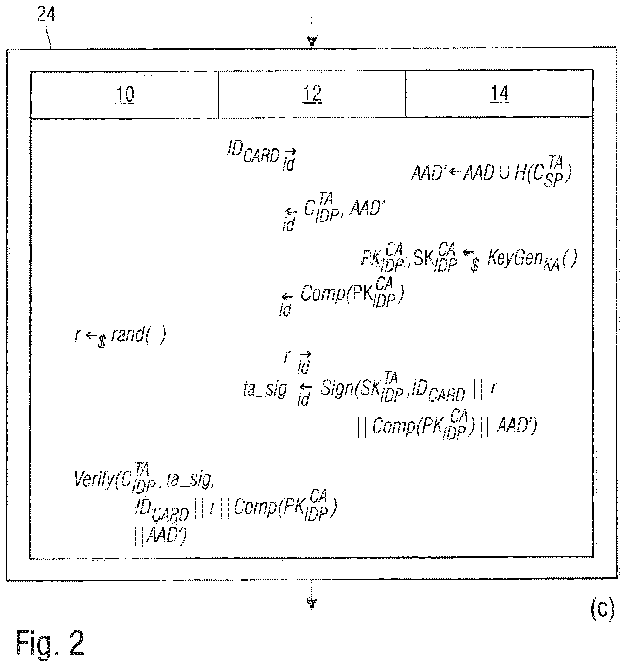

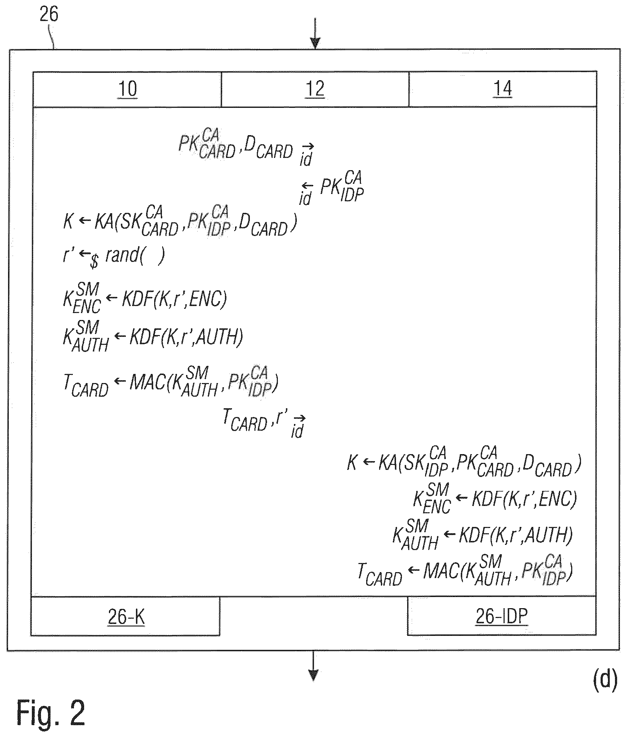

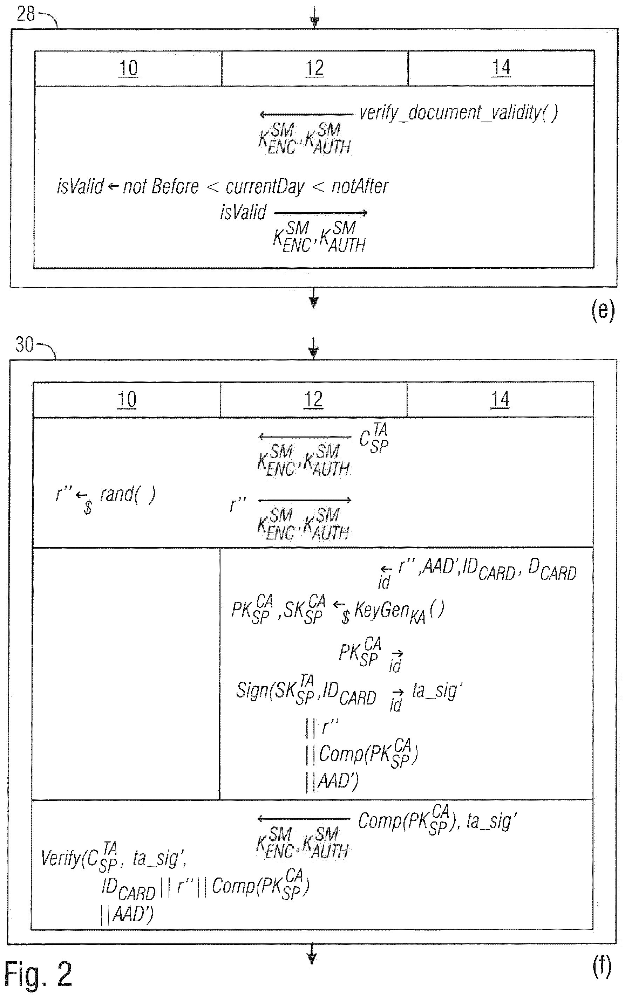

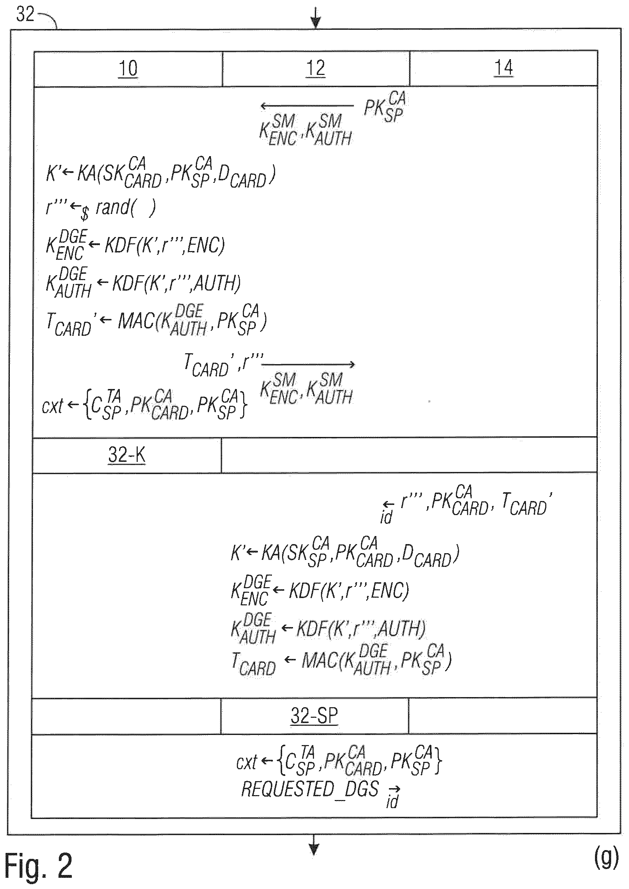

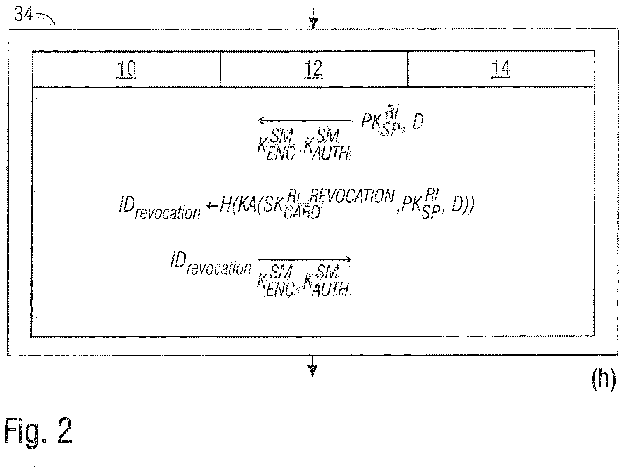

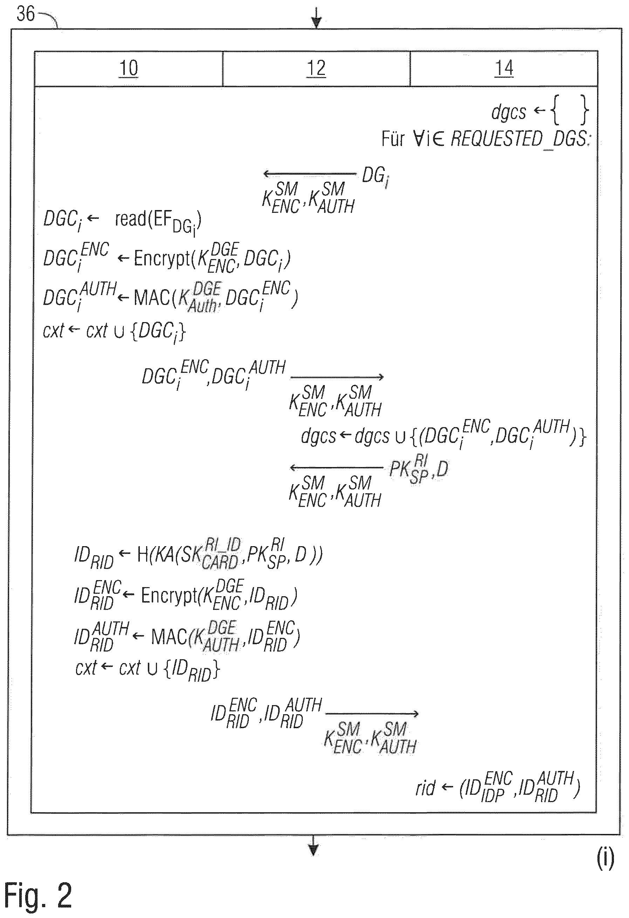

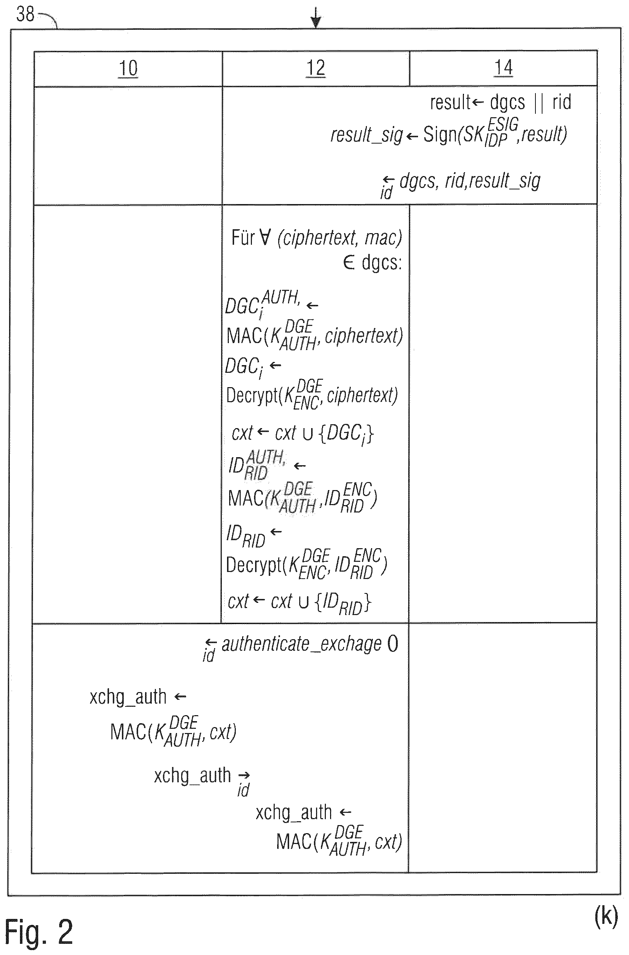

Der Ablauf einer Identifizierung mit einem erfindungsgemäßen Verfahren wird nunmehr mit Bezug auf Fig. 2 näher erläutert, wobei Fig. 2(a) den Ausgangszustand und Fig. 2(b) bis 2(k) verschiedene Teilschritte in einer bevorzugten Verfahrensführung zeigen. In der Figur bezeichnet:

- *Sign* eine Funktion, die mittels eines privaten Schlüssels eine kryptographische Signatur über bestimmte Daten erstellt,
- *Verify* eine Funktion, die mittels eines öffentlichen Schlüssels eine kryptographische Signatur über bestimmte Daten überprüft,
- *Comp* eine Funktion, die einen öffentlichen Schlüssel auf einen kennzeichnenden Wert komprimiert,
- *MAC* eine Funktion, die mittels eines symmetrischen Schlüssels einen Message Authentication Code über bestimmte Daten erstellt,
- *KA* eine Funktion, die mittels eines privaten Schlüssels und eines öffentlichen Schlüssels eine kryptographische Schlüsselvereinbarung durchführt und einen Wert zurückgibt,
- *KeyGen* eine Funktion, die ein asymmetrisches Schlüsselpaar erstellt,
- rand eine Funktion, die einen zufälligen, kryptographisch sicheren Wert erstellt,

- *KDF* eine Funktion, die aus einem Wert einen anderen Wert ableitet, der von einem gegebenen Kontext abhängt,
- *H* eine Funktion, die einen Hash über bestimmte Daten erstellt, und
- bezeichnet Konkatenation.

Die Kommunikation zwischen zwei Parteien wird durch Pfeile ausgedrückt, wobei die Richtung eines Pfeils die Richtung des Kommunikationsflusses darstellt. $\overleftarrow{id}$ steht für unverschlüsselte Kommunikation (wobei eine Verschlüsselung durch ein anderes Protokoll, beispielsweise TLS, realisiert werden kann), und $\overleftarrow{K_{ENC}^{SM}, K_{AUTH}^{SM}}$ steht für eine Kommunikation, die mittels $K_{ENC}^{SM}$ verschlüsselt und $K_{AUTH}^{SM}$ authentifiziert ist.

Die Protokolle der Erweiterten Zugangskontrolle (Extended Access Control, EAC) betreffen Sicherheitsmechanismen in elektronischen Ausweisdokumenten. EAC beinhaltet verschiedene Protokolle, die je nachdem, welches elektronische Ausweisdokument gelesen werden soll, in einer bestimmten Reihenfolge durchgeführt werden. Zu den EAC-Protokollen zählen insbesondere "Chip Authentication" (CA) und "Terminal Authentication" (TA), die beiden Protokolle werden zusammen mit "Basic Access Control" (BAC) bzw. "Password Authenticated Connection Establishment" (PACE) und "Passive Authentication" (PA) ausgeführt. Diese Protokolle und ihr Zusammenwirken werden in der Technischen Richtlinie BSI-TR-03110 genauer beschrieben, deren Offenbarung insoweit in die vorliegende Anmeldung aufgenommen wird.

Figur 2(a) zeigt zunächst den Ausgangszustand 20 beim Start des erfindungsgemäßen Verfahrens. Die eID-Karte 10 ist personalisiert und beinhaltet die persönlichen Daten ihres Inhabers. Im Rahmen der Personalisierung wurde unter andrem ein Schlüsselpaar für eine Chip Authentication erstellt. Dabei bezeichnet $SK_{CARD}^{CA}$ den privaten Schlüssel für eine Chip Authentication und $PK_{CARD}^{CA}$ den öffentlichen Schlüssel für eine Chip Authentication. Der öffentliche Schlüssel $PK_{CARD}^{CA}$ wurde von einem Aussteller der eID-Karte 10 signiert und die Signatur ist in der Elementary-Datei $EF_{CardSecurity}$ gespeichert.

Außerdem verfügt die Karte über zwei statische private Schlüssel für die Erzeugung eines Sperrmerkmals und einer Restricted ID (Pseudonym) mittels Restricted Identification. Dabei bezeichnet $SK_{CARD}^{RI\_REVOCATION}$ den privaten Schlüssel für Restricted Identification im Kontext von Revocation Checking und $SK_{CARD}^{RI\_ID}$ den privaten Schlüssel für Restricted Identification im Kontext von Restricted ID.

Der Diensteanbieter 12 bietet eine über das Internet verfügbare Dienstleistung an, die eine Überprüfung der Identität der Nutzer erfordert. Der Diensteanbieter verfügt über ein von einem Aussteller von eID-Karten ausgestelltes Berechtigungszertifikat, das die vom Diensteanbieter generell auslesbaren persönlichen Daten festlegt, sowie über einen privaten Schlüssel, dessen öffentlicher Schlüssel mit dem Berechtigungszertifikat verknüpft ist. Außerdem besitzt der Diensteanbieter 12 einen öffentlichen Schlüssel für die Erzeugung von Pseudonymen mittels Restricted Identification (Sector Public Key), der kryptografisch mit dem Berechtigungszertifikat verknüpft ist. In Fig. 2(a) bezeichnet $SK_{SP}^{TA}$ den privaten Schlüssel des Diensteanbieters 12 für eine Terminal Authentication, $C_{SP}^{TA}$ das Zertifikat für eine Terminal Authentication und $PK_{SP}^{RI}$, den öffentlichen Schlüssel für eine Restricted Identification.

Der Identifizierungsanbieter 14 bietet als Dienstleistung das Auslesen von eID-Karten, wie etwa der Karte 10 an. Der Identifizierungsanbieter 14 verfügt über ein von dem Aussteller von eID-Karten ausgestelltes Berechtigungszertifikat, das das Auslesen von persönlichen Daten ausschließt, sowie über einen privaten Schlüssel, dessen öffentlicher Schlüssel mit dem Berechtigungszertifikat verknüpft ist. Dem Identifizierungsanbieter 14 liegen weiter alle für die Überprüfung der Gültigkeit einer eID-Karte 10 benötigten Informationen vor, insbesondere eine Liste mit CSCA-Zertifikaten und eine Liste mit gesperrten Zertifikaten. Außerdem übernimmt der Identifizierungsanbieter 14 das Management, insbesondere die Erneuerung von Berechtigungszertifikaten und Sector Public Keys von Diensteanbietern 12, was unter Beteiligung der Diensteanbieter erfolgt. In Fig. 2(a) bezeichnet $SK_{IDP}^{TA}$ den privaten Schlüssel des Identifizierungsanbieters 14 für eine Terminal Authentication, $C_{IDP}^{TA}$ das Zertifikat für eine Terminal Authentication und $SK_{IDP}^{ESIG}$ den privaten Schlüssel für die Kommunikation mit dem Diensteanbieter 12.

Das Symbol REQUESTED_DGS steht für die Liste von Datengruppen, die im Rahmen einer konkreten Identifizierung ausgelesen werden müssen. Diese ist zwingend eine Teilmenge der im Berechtigungszertifikat des Diensteanbieters festgelegten, generell auslesbaren Datengruppen. Sie wird vom Diensteanbieter 12 festgelegt und dem Identifizierungsanbieter 14 mitgeteilt. Die Datengruppen der genannten Liste werden im Rahmen dieser Beschreibung teilweise auch als "benötigte Identifikationsdaten" bezeichnet.

Mit Bezug auf Fig. 2(b) wird im Schritt 22 zunächst ein sicherer Kanal mit dem PIN-Eingabegerät aufgebaut. Die Vorgehensweise folgt dabei im Wesentlichen Abschnitt 3.2 der Technischen Richtlinie BSI TR-03110, Teil 2, für den Aufbau eines PACE-Kanals, dem genauere Einzelheiten entnommen werden können. Kurz zusammengefasst initiiert der Inhaber der eID-Karte 10 im Schritt 22 eine Identifizierung mit dem Diensteanbieter 12. Dabei übermittelt der Diensteanbieter 12 zunächst sein Berechtigungszertifikat, das Berechtigungszertifikat des von ihm beauftragten Identifizierungsanbieters 14, sowie eine Liste mit den zu auszulesenden persönlichen Daten und andere für die Identifizierung benötigte Metadaten (Certificate Description und AAD). Die Daten aus dem Berechtigungszertifikat, insbesondere die Identität des Diensteanbieters 12 werden über die lokale Client-Software dem Nutzer gezeigt. Wenn der Nutzer der Identifizierung zustimmt, wird zwischen der eID-Karte 10 und dem Endgerät des Nutzers bzw. einem Kartenleser ein PACE-Kanal aufgebaut. Dabei gibt der Nutzer seine PIN ein.

Mit Bezug auf Fig. 2(c) erfolgt dann im Schritt 24 eine Terminal Authentication mit dem Identifizierungsanbieter 14. Die Client-Software des Nutzers signalisiert den erfolgten Aufbau eines PACE-Kanals durch die Übermittlung der Elementary-Datei *CardAccess* und eines PACE-Identifiers für die Karte 10 an den Diensteanbieter 12. Die Client-Software leitet von nun an Nachrichten von der oder für die Karte 10 weiter und führt gegebenenfalls Konvertierungen durch, falls inkompatible Nachrichtenformate verwendet werden.

Der Diensteanbieter 12 benachrichtigt seinen Identifizierungsanbieter 14 über eine neue Identifizierung und leitet den erhaltenen Inhalt von *CardAccess* weiter. Bis auf Weiteres leitet der Diensteanbieter 12 Nachrichten zwischen dem Identifizierungsanbieter 14 und der lokalen Client-Software des Nutzers der Karte 10 in beiden Richtungen weiter, sodass ein logischer Kanal zwischen dem Identifizierungsanbieter 14 und der Karte 10 entsteht, siehe das Bezugszeichen 15 in Fig. 1.

Der Identifizierungsanbieter 14 schickt an die Karte 10 dann sein Berechtigungszertifikat sowie ein berechnetes AAD-Objekt, das neben klassischen AAD-Feldern ein Hash über das Berechtigungszertifikat des Diensteanbieters 12 enthält. Da diese Kommunikation nicht verschlüsselt ist, kann die Client-Software diese übermittelten Daten mitlesen. Die Client-Software stellt sicher, dass das übermittelte Zertifikat dem Berechtigungszertifikat entspricht, das zuvor für den Identifizierungsanbieter 14 übermittelt wurde. Außerdem stellt die Client-Software sicher, dass das Hash im AAD-Objekt dem Hash über das Berechtigungszertifikat entspricht, das zuvor für den Diensteanbieter 12 übermittelt wurde und dessen Inhalte dem Nutzer gezeigt wurden.

Im Anschluss führt der Identifizierungsanbieter 14 das klassische Terminal Authentication-Protokoll durch. Dabei erstellt der Identifizierungsanbieter 14 einen ephemeralen Schlüssel für Chip Authentication und übermittelt eine Referenz auf den öffentlichen Schlüssel an die Karte 10, fordert ein Challenge von der Karte 10 an, erstellt mittels seines privaten Schlüssels eine Signatur über das Challenge, den ephemeralen öffentlichen Schlüssel und das zuvor übermittelte AAD-Objekt und übermittelt die Signatur an die Karte 10.

Die Karte 10 überprüft das Zertifikat mithilfe der ihr vorliegenden Trust Anchors ihres Ausstellers und die erhaltene Signatur mittels des Zertifikates des Identifizierungsanbieters 14. Falls alle Überprüfungen erfolgreich sind, speichert die Karte die erhaltene Referenz auf den öffentlichen Schlüssel des Identifizierungsanbieters 14 und die Daten aus dem AAD-Objekt.

Mit Bezug auf Fig. 2(d) wird bei erfolgreicher Terminal Authentication im Schritt 26 dann eine Chip Authentication mit Identifizierungsanbieter 14 durchgeführt. Der Identifizierungsanbieter 14 liest dazu die Elementary-Datei *CardSecurity,* führt Passive Authentication durch, um die Authentizität der Karte 10 zu überprüfen, und übermittelt an die Karte 10 seinen vollständigen ephemeralen öffentlichen Schlüssel.

Die Karte 10 überprüft die Übereinstimmung mit der zuvor gespeicherten Referenz für den ephemeralen öffentlichen Schlüssel des Identifizierungsanbieters 14, führt Key Agreement durch, leitet Schlüssel für Secure Messaging ab und berechnet einen Authentication Token mittels eines zufällig erzeugten Nonces, den die Karte zusammen mit dem Nonce an den Identifizierungsanbieter 14 übermittelt. Dieser führt ebenfalls Key Agreement durch, leitet Schlüssel für Secure Messaging ab und berechnet einen Authentication Token mittels des übermittelten Nonces. Falls der berechnete Authentication Token mit dem übermittelten Token übereinstimmt, ist Chip Authentication erfolgreich ausgeführt. Der logische Kanal wird von nun an mit dem abgeleiteten Schlüsselmaterial $K_{ENC}^{SM}$ und $K_{AUTH}^{SM}$ (im Rahmen dieser Beschreibung auch als "erstes Schlüsselmaterial" bezeichnet) mittels Secure Messaging kryptographisch geschützt. Die Karte 10 und der Identifizierungsanbieter 14 starten in den Teilschritten 26-K bzw. 26-IDP Secure Messaging mit diesem Schlüsselmaterial.

Mit Bezug auf Fig. 2(e) wird in Schritt 28 die Gültigkeit der Karte 10 über den verschlüsselten und authentifizierten Kanal überprüft. Dazu schickt der Identifizierungsanbieter 14 eine Anfrage an die Karte 10. Die Karte 10 antwortet positiv, wenn das Datum, das zuvor im AAD-Objekt an die Karte übermittelt wurde, zwischen ihrem Ausstellungsdatum notBefore und ihrem Ablaufdatum notAfter steht, und negativ sonst.

Mit Bezug auf Fig. 2(f) erfolgt im Schritt 30 eine Terminal Authentication mit dem Diensteanbieter 12. Der Identifizierungsanbieter 14 übermittelt dazu das Berechtigungszertifikat des Diensteanbieters 12 an die Karte 10. Die Karte 10 überprüft das Zertifikat mithilfe der ihr vorliegenden Trust Anchors ihres Ausstellers, berechnet ein Hash über das Zertifikat und stellt sicher, dass der berechnete Hash mit dem zuvor gespeicherten Hash übereinstimmt. Wenn alle Überprüfungen erfolgreich sind, erstellt die Karte 10 ein Challenge und schickt es an den Identifizierungsanbieter 14.

Nun wird der Diensteanbieter 12 aktiv. Der Identifizierungsanbieter 14 leitet über einen sicheren Kanal das Challenge der Karte 10 sowie das zuvor an die Karte 10 übermittelte AAD-Objekt weiter. Der Diensteanbieter 12 erstellt ein ephemerales Schlüsselpaar sowie mittels seines privaten Schlüssels eine Signatur über das Challenge, den ephemeralen öffentlichen Schlüssel und das erhaltene AAD-Objekt. Der Diensteanbieter 12 schickt die erstellte Signatur und den ephemeralen öffentlichen Schlüssel an den Identifizierungsanbieter 14, der über den logischen Kanal mit der Karte 10 die Signatur und eine Referenz auf den ephemeralen öffentlichen Schlüssel des Diensteanbieters 12 weiterleitet. Die Karte 10 überprüft die Signatur mittels des Berechtigungszertifikates des Diensteanbieters 12.

Wenn die Signatur erfolgreich überprüft werden konnte, wird mit Bezug auf Fig. 2(g) in Schritt 32 eine Chip Authentication mit dem Diensteanbieter 12 durchgeführt. Der Identifizierungsanbieter 14 schickt dazu den vollständigen ephemeralen öffentlichen Schlüssel des Diensteanbieters 12 an die Karte 10. Diese führt Key Agreement durch, leitet Schlüssel für die Verschlüsselung und Authentisierung von Datengruppen ab und berechnet einen Authentication Token mittels eines zufällig erzeugten Nonces, den die Karte 10 zusammen mit dem Nonce an den Identifizierungsanbieter 14 übermittelt.

Der Identifizierungsanbieter 14 leitet den Authentication Token, das Nonce und den statischen öffentlichen Schlüssel an den Diensteanbieter 12 weiter. Letzterer führt ebenfalls Key Agreement durch, leitet Schlüssel die Verschlüsselung und Authentisierung von Datengruppen ab und berechnet einen Authentication Token mittels des übermittelten Nonces. Wenn der berechnete Authentication Token mit dem übermittelten Token übereinstimmt, ist Chip Authentication erfolgreich ausgeführt.

Die Karte 10 und der Diensteanbieter 12 initialisieren in den Teilschritten 32-K bzw. 32-SP die Verschlüsselung/Entschlüsselung und Authentisierung von Datengruppen mit den abgeleiteten Schlüsseln $K_{ENC}^{DGE}$ und $K_{AUTH}^{DGE}$ (im Rahmen dieser Beschreibung auch als "zweites Schlüsselmaterial" bezeichnet) und verwenden diese ab der Initialisierung.

Sowohl der Diensteanbieter 12, als auch die Karte 10 erzeugen eine Kontext-Variable *cxt* und speichern ihren Zustand zwischen. Zum Kontext fügen beide das Berechtigungszertifikat des Diensteanbieters 12, den statischen öffentlichen Schlüssel der Karte 10 und den ephemeralen öffentlichen Schlüssel des Diensteanbieters 12 hinzu.

Am Ende von Schritt 32 teilt der Diensteanbieter 12 dem Identifizierungsanbieter 14 mit, welche persönlichen Daten aus der Karte 10 ausgelesen werden sollen.

Mit Bezug auf Fig. 2(h) erfolgt in Schritt 34 eine Überprüfung des Revocation-Status der Karte 10. Um den Status der Karte 10 mithilfe einer Blockliste überprüfen zu können, wird von Restricted Identification (RI) Gebrauch gemacht. Dazu schickt der Identifizierungsanbieter 14 den öffentlichen Schlüssel für RI (sogenannter Sector Public Key) des Diensteanbieters 12 an die Karte 10. Diese berechnet einen Hash über den Schlüssel und stellt sicher, dass das im vorigen Schritt überprüfte Zertifikat des Diensteanbieters 12 diesen Hash enthält. Dann führt die Karte 10 Key Agreement anhand ihres statischen privaten Schlüssels für RI für Revocation und des erhaltenen öffentlichen Schlüssels durch und hasht das entstandene Shared Secret. Der Hash wird zurück an den Identifizierungsanbieter 14 geschickt. Der Identifizierungsanbieter 14 überprüft, ob dieses Sperrmerkmal auf einer speziell für diesen Diensteanbieter 12 vorbereiteten Blockliste steht, und bricht die Identifizierung ab, sollte dies der Fall sein.

Mit Bezug auf Fig. 2(j) erfolgt in Schritt 36 das Auslesen der Datengruppen. Dazu fragt der Identifizierungsanbieter 14 bei der Karte 10 alle persönlichen Daten an, die ausgelesen werden sollen und die in Form von Datengruppen gespeichert werden. Für jede Datengruppe bereitet die Karte 10 ihren Inhalt vor, verschlüsselt ihn mittels des im vorletzten Schritt abgeleiteten Schlüssels für Verschlüsselung von Datengruppen und berechnet einen MAC über den Geheimtext mittels des im vorigen Schritt abgeleiteten Schlüssels für Authentisierung von Datengruppen. Außerdem fügt die Karte 10 den Inhalt der Datengruppe zum Kontext hinzu. Am Ende schickt die Karte 10 den Geheimtext und den berechneten MAC an den Identifizierungsanbieter 14, wie üblich über den durch Secure Messaging geschützten logischen Kommunikationskanal.

Optional kann der Identifizierungsanbieter 14 die Erzeugung einer Restricted ID ansteuern. Dazu schickt der Identifizierungsanbieter 14 den öffentlichen Schlüssel für RI (Sector Public Key) des Diensteanbieters 12 an die Karte 10. Die Karte 10 berechnet einen Hash über den Schlüssel und stellt sicher, dass das im vorletzten Schritt überprüfte Zertifikat des Diensteanbieters 12 diesen Hash enthält. Dann führt die Karte 10 Key Agreement anhand ihres statischen privaten Schlüssels für RI für die Erzeugung von Restricted IDs und des erhaltenen öffentlichen Schlüssels durch und hasht das entstandene Shared Secret. Analog zu dem Vorgehen bei Datengruppen, wird der Hash verschlüsselt, der Geheimtext wird authentifiziert, der Hash wird zum Kontext hinzugefügt und über den Secure Messaging-Kanal an den Identifizierungsanbieter 14 geschickt.

Schließlich wird mit Bezug auf Fig. 2(k) im Schritt 38 das Ergebnis an den Diensteanbieter 12 übermittelt und eine Gegenprobe durchgeführt. Wenn dem Identifizierungsanbieter 14 die verschlüsselten und authentifizierten Inhalte aller relevanten Datengruppen vorliegen, leitet er sie an den Diensteanbieter 12 weiter, wobei der Identifizierungsanbieter 14 diese Nachricht mit einer digitalen Signatur versieht. Mit dieser Signatur zeugt der Identifizierungsanbieter 14 dem Diensteanbieter 12 gegenüber dafür, dass die persönlichen Daten, die in der Nachricht erhalten sind, von einer Karte 10 stammen, deren Authentizität und Gültigkeit er überprüft hat.

Der Diensteanbieter 12 überprüft zuerst die Signatur über die erhaltene Nachricht. Dann nimmt der Diensteanbieter 12 für jede Datengruppe folgende Teilschritte vor:

- er berechnet einen MAC mittels des zuvor abgeleiteten Schlüssels für Authentisierung von Datengruppen und vergleicht diesen mit dem MAC für die Datengruppe der Nachricht;
- er entschlüsselt den Geheimtext für die Datengruppe der Nachricht mittels des im zuvor Schritt abgeleiteten Schlüssels für Verschlüsselung von Datengruppen; und
- er fügt den entschlüsselten Inhalt der Datengruppe zum Kontext hinzu.

Analog geht die Karte 10 vor, wenn eine Restricted ID erzeugt wurde.

Am Ende von Schritt 38 bricht der Diensteanbieter 12 die Weiterleitung von Nachrichten zwischen der Karte 10 und dem Identifizierungsanbieter 14 ab und schickt der Karte 10 einen Befehl zur Authentisierung des Austauschs.

Da dieser Befehl nicht über den verschlüsselten Secure Messaging-Kanal geschickt wird, terminiert die Karte den Secure Messaging-Kanal. Des Weiteren berechnet die Karte 10 einen MAC über den zwischengespeicherten Kontext mittels des zuvor abgeleiteten Schlüssels für Authentisierung von Datengruppen und schickt diesen an den Diensteanbieter 12 zurück. Der Diensteanbieter berechnet ebenfalls einen MAC über den zwischengespeicherten Kontext mittels des zuvor abgeleiteten Schlüssels für Authentisierung von Datengruppen und vergleicht ihn mit dem erhaltenen MAC. Wenn eine Übereinstimmung festgestellt wird, ist der Identifizierungsvorgang erfolgreich abgeschlossen.

Bezugszeichenliste

| 10 | eID-Karte |
| 11 | Verbindung Karte - Diensteanbieter |
| 12 | Diensteanbieter |
| 13 | Verbindung Diensteanbieter - Identifizierungsanbieter |
| 14 | Identifizierungsanbieter |
| 15 | logischer Kommunikationskanal |
| 20 | Ausgangszustand |
| 22, 24, 26 | Verfahrensschritte |
| 26-K, 26-IDP | Teilschritte |
| 28,30,32 | Verfahrensschritte |
| 32-K, 32-SP | Teilschritte |
| 34, 36, 38 | Verfahrensschritte |

**Patentansprüche**

1. Verfahren zur sicheren Identifizierung einer Person mit einer Identifikationskarte (10) durch eine Verifikationsinstanz (14) gegenüber einem Diensteanbieter (12), bei dem

   - eine sichere, einseitig authentifizierte Kommunikationsverbindung zwischen der Identifikationskarte (10) und dem Diensteanbieter (12) aufgebaut wird, und eine sichere, gegenseitig authentifizierte Kommunikationsverbindung zwischen dem Diensteanbieter (12) und der Verifikationsinstanz (14) aufgebaut wird,
   - die Kommunikation zwischen der Identifikationskarte (10) und der Verifikationsinstanz (14) ausschließlich über den Diensteanbieter (12) als Proxy durchgeführt wird, welcher alle zwischen der Identifikationskarte (10) und der Verifikationsinstanz (14) ausgetauschten Nachrichten abfängt und mit eigener Kennung weiterleitet, so dass ein logischer Kommunikationskanal zwischen der Identifikationskarte (10) und der Verifikationsinstanz (14) entsteht,

   **dadurch gekennzeichnet, dass**

   - über den logischen Kommunikationskanal eine erste, authentifizierte Schlüsselvereinbarung für eine verschlüsselte Kommunikation zwischen der Verifikationsinstanz (14) und der Identifikationskarte (10) durchgeführt wird,
   - von der Verifikationsinstanz (14) mit dem ersten Schlüsselmaterial verschlüsselt über den logischen Kommunikationskanal die Gültigkeit der Identifikationskarte (10) verifiziert wird,
   - zwischen dem Diensteanbieter (12) und der Identifikationskarte (10) eine zweite, authentifizierte Schlüsselvereinbarung für die Verschlüsselung und Authentisierung von benötigten Identifikationsdaten und/oder von Resultaten von Kartenoperationen durchgeführt wird,
   - die benötigten Identifikationsdaten von der Identifikationskarte (10) mit dem zweiten Schlüsselmaterial verschlüsselt werden und mit dem ersten Schlüsselmaterial verschlüsselt über den logischen Kommunikationskanal an die Verifikationsinstanz (14) übermittelt werden,
- die Verifikationsinstanz (14) die mit dem zweiten Schlüsselmaterial verschlüsselten Identifikationsdaten an den Diensteanbieter (12) übermittelt und diesem bestätigt, dass die in der Übermittlung enthaltenen Identifikationsdaten von einer von der Verifikationsinstanz (14) erfolgreich auf Gültigkeit geprüften Identifikationskarte (10) stammen, und
- der Diensteanbieter (12) die von der Verifikationsinstanz (14) übermittelten Identifikationsdaten mit dem zweiten Schlüsselmaterial entschlüsselt.

2. Verfahren nach Anspruch 1, **dadurch gekennzeichnet, dass** das Verfahren Protokolle der Erweiterte Zugangskontrolle (EAC) einsetzt, insbesondere Chip Authentication, Terminal Authentication und/oder PACE (Password Authenticated Connection Establishment).

3. Verfahren nach Anspruch 2, **dadurch gekennzeichnet, dass** zur Durchführung der ersten Schlüsselvereinbarung eine Terminal Authentication mit der Verifikationsinstanz (14) vorgenommen wird, und bei erfolgreicher Terminal Authentication eine Chip Authentication mit der Verifikationsinstanz (14) vorgenommen wird.

4. Verfahren nach Anspruch 2 oder 3, **dadurch gekennzeichnet, dass** zur Durchführung der zweiten Schlüsselvereinbarung eine Terminal Authentication mit dem Diensteanbieter (12) vorgenommen wird, und bei erfolgreicher Terminal Authentication eine Chip Authentication mit dem Diensteanbieter (12) vorgenommen wird.

5. Verfahren nach wenigstens einem der Ansprüche 1 bis 4, **dadurch gekennzeichnet, dass** der Diensteanbieter (12) und die Identifikationskarte (10) jeweils Belegdaten für die stattgefundene Identifizierung zwischenspeichern, dass die Identifikationskarte (10) ihre Belegdaten an den Diensteanbieter (12) übermittelt und dass der Diensteanbieter (12) zur Authentisierung des Austausches die Übereinstimmung der von der Identifikationskarte (10) übermittelten Belegdaten mit den ihm vorliegenden Belegdaten prüft.

6. Verfahren nach Anspruch 5, **dadurch gekennzeichnet, dass** die Belegdaten ein Berechtigungszertifikat des Diensteanbieters (12), einen statischen öffentlichen Schlüssel der Identifikationskarte (10), einen ephemeralen öffentlichen Schlüssel des Diensteanbieters (12) und/oder die Inhalte der übermittelten Identifikationsdaten enthalten.

7. Verfahren nach wenigstens einem der Ansprüche 1 bis 6, **dadurch gekennzeichnet, dass** die Verifikationsinstanz (14) mittels Restricted Identification den Status der Identifikationskarte (10) prüft.

8. Verfahren nach wenigstens einem der Ansprüche 1 bis 7, **dadurch gekennzeichnet, dass** die Identifikationskarte (10) eine eID-Karte ist.

9. Verfahren nach wenigstens einem der Ansprüche 1 bis 8, **dadurch gekennzeichnet, dass** die Identifikationskarte (10) in ein Endgerät integriert ist, oder dass die Identifikationskarte (10) als eigenständiges System ausgebildet sein, das über eine Leseeinrichtung mit einem Endgerät verbunden ist, und dass in beiden Fällen vorteilhaft eine lokale Client-Software des Endgerätes die Person durch den Identifizierungsablauf führt und die Kommunikation mit der Identifikationskarte (10) übernimmt.

10. Verfahren nach wenigstens einem der Ansprüche 1 bis 9, **dadurch gekennzeichnet, dass** der Diensteanbieter (12) über ein von einem Aussteller der Identifikationskarte (10) ausgestelltes Berechtigungszertifikat verfügt, das die vom Diensteanbieter (12) auslesbaren Identifikationsdaten festlegt, und dass der Diensteanbieter (12) dieses Berechtigungszertifikat zu Beginn des Verfahrens an die Identifikationskarte (10) übermittelt, um die Zustimmung der Person zur Identifizierung einzuholen.

11. Verfahren nach wenigstens einem der Ansprüche 1 bis 10, **dadurch gekennzeichnet, dass** die Verifikationsinstanz (14) über ein von einem Aussteller der Identifikationskarte (10) ausgestelltes Berechtigungszertifikat verfügt, das das Auslesen persönlicher Daten ausschließt, und dass dieses Berechtigungszertifikat zu Beginn des Verfahrens an die Identifikationskarte (10) übermittelt wird, um die Zustimmung der Person zur Identifizierung unter Einbeziehung der Verifikationsinstanz (14) einzuholen.

**Claims**

1. Method for the secure identification of a person using an identification card (10) by a verification instance (14) to a service provider (12), in which

   - a secure, one-way authenticated communication link is established between the identification card (10) and the service provider (12), and a secure, two-way authenticated communication link is established between the service provider (12) and the verification instance (14),
   - the communication between the identification card (10) and the verification instance (14) is carried out exclusively via the service provider (12) as a proxy, which intercepts all messages exchanged between the identification card (10) and the verification instance (14) and forwards them with its own identifier so that a logical communication channel is created between the identification card (10) and the verification instance (14),

**characterized in that**

- a first, authenticated key agreement for encrypted communication between the verification instance (14) and the identification card (10) is implemented via the logical communication channel,
- the validity of the identification card (10) is verified by the verification instance (14), encrypted using the first key material via the logical communication channel,
- a second, authenticated key agreement is implemented between the service provider (12) and the identification card (10) for the encryption and authentication of required identification data and/or the results of card operations,
- the required identification data is encrypted with the second key material by the identification card (10) and transmitted encrypted with the first key material via the logical communication channel to the verification instance (14),
- the verification instance (14) transmits the identification data encrypted with the second key material to the service provider (12) and confirms to it that the identification data contained in the transmission originates from an identification card (10) successfully validated by the verification instance (14), and
- the service provider (12) decrypts the identification data transmitted by the verification instance (14) using the second key material.

2. Method according to Claim 1, **characterized in that** the method uses Extended Access Control (EAC) protocols, in particular Chip Authentication, Terminal Authentication and/or PACE (Password Authenticated Connection Establishment).

3. Method according to Claim 2, **characterized in that** to implement the first key agreement, a terminal authentication is carried out with the verification instance (14) and, if terminal authentication is successful, a chip authentication is carried out with the verification instance (14).

4. Method according to Claim 2 or 3, **characterized in that** to implement the second key agreement, a terminal authentication is carried out with the service provider (12) and, if terminal authentication is successful, a chip authentication is carried out with the service provider (12).

5. Method according to at least one of Claims 1 to 4, **characterized in that** the service provider (12) and the identification card (10) each temporarily store documentary data for the identification that has taken place, that the identification card (10) transmits its documentary data to the service provider (12) and that the service provider (12) checks the conformity of the documentary data transmitted by the identification card (10) with the documentary data available to it in order to authenticate the exchange.

6. Method according to Claim 5, **characterized in that** the documentary data contains an authorization certificate of the service provider (12), a static public key of the identification card (10), an ephemeral public key of the service provider (12) and/or the contents of the transmitted identification data.

7. Method according to at least one of Claims 1 to 6, **characterized in that** the verification instance (14) uses Restricted Identification to check the status of the identification card (10).

8. Method according to at least one of Claims 1 to 7, **characterized in that** the identification card (10) is an eID card.

9. Method according to at least one of Claims 1 to 8, **characterized in that** the identification card (10) is integrated into a terminal device, or that the identification card (10) is designed as a stand-alone system which is connected to a terminal device via a reading device, and that in both cases, a local client software of the terminal device advantageously guides the person through the identification process and performs the communication with the identification card (10) .

10. Method according to at least one of Claims 1 to 9, **characterized in that** the service provider (12) has an authorization certificate issued by an issuer of the identification card (10), which specifies the identification data that can be read out by the service provider (12), and that the service provider (12) transmits said authorization certificate to the identification card (10) at the beginning of the method in order to obtain the consent of the person for identification.

11. Method according to at least one of Claims 1 to 10, **characterized in that** the verification instance (14) has an authorization certificate issued by an issuer of the identification card (10), which prevents the reading of personal data, and that said authorization certificate is transmitted to the identification card (10) at the beginning of the method in order to obtain the consent of the person for identification with the involvement of the verification instance (14).

**Revendications**

1. Procédé d'identification sécurisée d'une personne possédant une carte d'identification (10) par une instance de vérification (14) par rapport à un prestataire de service (12), dans lequel

   - une connexion de communication sécurisée et authentifiée unidirectionnelle est établie entre la carte d'identification (10) et le prestataire de service (12), et une connexion de communication sécurisée et mutuellement authentifiée entre le prestataire de service (12) et l'instance de vérification (14) est établie,
   - la communication entre la carte d'identification (10) et l'instance de vérification (14) est effectuée exclusivement via le prestataire de service (12) agissant comme serveur mandataire, qui intercepte tous les messages échangés entre la carte d'identification (10) et l'instance de vérification (14) et les transmet avec son propre identifiant, de telle sorte qu'un canal de communication logique entre la carte d'identification (10) et l'instance de vérification (14) soit généré,

   **caractérisé en ce que**

   - un premier accord de clé authentifié via le canal de communication logique est conclu entre l'instance de vérification (14) et la carte d'identification (10) pour une communication cryptée,
   - la validité de la carte d'identification (10) est vérifiée par l'instance de vérification (14) avec le premier matériel de chiffrement crypté via le canal de communication logique,
   - un deuxième accord de clé authentifié est conclu entre le prestataire de service (12) et la carte d'identification (10) pour le cryptage et l'authentification des données d'identification requises et/ou des résultats d'opérations avec la carte,
   - les données d'identification requises de la carte d'identification (10) sont cryptées avec le deuxième matériel de chiffrement et avec le premier matériel de chiffrement sont transmises sous forme cryptée à l'instance de vérification (14) via le canal de communication logique,
   - l'instance de vérification (14) transmet les données d'identification cryptées avec le deuxième matériel de chiffrement au prestataire de service (12) et confirme à ce dernier que les données d'identification contenues dans la transmission proviennent d'une carte d'identification (10) dont la validité a été vérifiée avec succès par l'instance de vérification (14), et
   - le prestataire de service (12) décrypte les données d'identification transmises par l'instance de vérification (14) avec le deuxième matériel de chiffrement.

2. Procédé selon la revendication 1, **caractérisé en ce que** le procédé utilise des protocoles de contrôle d'accès élargi (EAC), notamment Chip Authentication, Terminal Authentication et/ou PACE (établissement de connexion authentifié par mot de passe).

3. Procédé selon la revendication 2, **caractérisé en ce que** pour conclure le premier accord de clé, on effectue une authentification du terminal avec l'instance de vérification (14), et si l'authentification du terminal est réussie, on effectue une authentification par puce avec l'instance de vérification (14).

4. Procédé selon la revendication 2 ou 3, **caractérisé en ce que** pour réaliser le deuxième accord de clé, on effectue une authentification du terminal auprès du prestataire de service (12), et si l'authentification du terminal est réussie, on effectue une authentification par puce avec le prestataire de service (12).

5. Procédé selon au moins une des revendications 1 à 4, **caractérisé en ce que** le prestataire de service (12) et la carte d'identification (10) mémorisent chacun temporairement les données documentaires pour l'identification qui a eu lieu, que la carte d'identification (10) transmet ses données documentaires au prestataire de service (12) et que le prestataire de service (12) vérifie la correspondance des données documentaires transmises par la carte d'identification (10) avec les données documentaires dont il dispose pour authentifier l'échange.

6. Procédé selon la revendication 5, **caractérisé en ce que** les données documentaires contiennent un certificat d'autorisation du prestataire de service (12), une clé publique statique de la carte d'identification (10), une clé publique éphémère du prestataire de service (12) et/ou les contenus des données d'identification transmises.

7. Procédé selon une au moins des revendications 1 à 6, **caractérisé en ce que** l'instance de vérification (14) vérifie le statut de la carte d'identification (10) au moyen d'une identification restreinte.

8. Procédé selon une au moins des revendications 1 à 7, **caractérisé en ce que** la carte d'identification (10) est une carte eID.

9. Procédé selon au moins une des revendications 1 à 8, **caractérisé en ce que** la carte d'identification (10) est intégrée dans un terminal ou que la carte d'identification (10) est conçue comme un système autonome connecté à un terminal via un appareil de lecture, et que dans les deux cas, un logiciel client local du terminal guide avantageusement la personne tout au long du procédé d'identification et prend en charge la communication avec la carte d'identification (10) .

**10.** Procédé selon une au moins des revendications 1 à 9, **caractérisé en ce que** le prestataire de service (12) dispose d'un certificat d'autorisation délivré par un émetteur de la carte d'identification (10), qui précise les données d'identification lisibles par le prestataire de service (12) et que le prestataire de service (12) transmet ce certificat d'autorisation à la carte d'identification (10) en début de procédé afin d'obtenir le consentement de la personne à l'identification.

**11.** Procédé selon une au moins des revendications 1 à 10, **caractérisé en ce que** l'instance de vérification (14) dispose d'un certificat d'autorisation délivré par un émetteur de la carte d'identification (10), qui exclut la lecture de données personnelles, et que ce certificat d'autorisation en début de procédure est transmis à la carte d'identification (10) afin d'obtenir le consentement de la personne à l'identification, y compris l'instance de vérification (14).

Fig. 1

| 10 | 12 | 14 |
|---|---|---|
| $SK_{CARD}^{CA}$ | $SK_{SP}^{TA}$ | $SK_{IDP}^{TA}$ |
| $PK_{CARD}^{CA}$ | $C_{SP}^{TA}$ | $C_{IDP}^{TA}$ |
| $SK_{CARD}^{RI\_REVOCATION}$ | $PK_{SP}^{RI}$ | $SK_{IDP}^{ESIG}$ |
| $SK_{CARD}^{RI\_ID}$ | | |
| $EF_{CardSecurity}$ | | |

(a)

| 10 | 12 | 14 |
|---|---|---|

(b)

Fig. 2

24

| 10 | 12 | 14 |

$ID_{CARD} \xrightarrow{id}$

$AAD' \leftarrow AAD \cup H(C_{SP}^{TA})$

$\xleftarrow{id} C_{IDP}^{TA}, AAD'$

$PK_{IDP}^{CA}, SK_{IDP}^{CA} \xleftarrow{\$} KeyGen_{KA}()$

$\xleftarrow{id} Comp(PK_{IDP}^{CA})$

$r \xleftarrow{\$} rand()$

$r \xrightarrow{id}$

$ta\_sig \xleftarrow{id} Sign(SK_{IDP}^{TA}, ID_{CARD} \| r$

$\| Comp(PK_{IDP}^{CA}) \| AAD')$

$Verify(C_{IDP}^{TA}, ta\_sig,$
$ID_{CARD} \| r \| Comp(PK_{IDP}^{CA})$
$\| AAD')$

(c)

# Fig. 2

Fig. 2

**Fig. 2**

32 ⌐

| 10 | 12 | 14 |
|---|---|---|

$$K^{SM}_{ENC}, K^{SM}_{AUTH} \xleftarrow{\hspace{2cm}} PK^{CA}_{SP}$$

$$K' \leftarrow KA(SK^{CA}_{CARD}, PK^{CA}_{SP}, D_{CARD})$$

$$r''' \xleftarrow{\$} rand(\ )$$

$$K^{DGE}_{ENC} \leftarrow KDF(K', r''', ENC)$$

$$K^{DGE}_{AUTH} \leftarrow KDF(K', r''', AUTH)$$

$$T_{CARD}' \leftarrow MAC(K^{DGE}_{AUTH}, PK^{CA}_{SP})$$

$$T_{CARD}', r''' \xrightarrow[K^{SM}_{ENC}, K^{SM}_{AUTH}]{\hspace{2cm}}$$

$$cxt \leftarrow \left\{ C^{TA}_{SP}, PK^{CA}_{CARD}, PK^{CA}_{SP} \right\}$$

| 32-K | |
|---|---|

$$\xleftarrow[id]{} r''', PK^{CA}_{CARD}, T_{CARD}'$$

$$K' \leftarrow KA(SK^{CA}_{SP}, PK^{CA}_{CARD}, D_{CARD})$$

$$K^{DGE}_{ENC} \leftarrow KDF(K', r''', ENC)$$

$$K^{DGE}_{AUTH} \leftarrow KDF(K', r''', AUTH)$$

$$T_{CARD} \leftarrow MAC(K^{DGE}_{AUTH}, PK^{CA}_{SP})$$

| | 32-SP | |
|---|---|---|

$$cxt \leftarrow \left\{ C^{TA}_{SP}, PK^{CA}_{CARD}, PK^{CA}_{SP} \right\}$$

$$REQUESTED\_DGS \xrightarrow[id]{}$$

**Fig. 2**

(g)

Fig. 2

36

| 10 | 12 | 14 |
|---|---|---|

$dgcs \leftarrow \{\ \}$

Für $\forall i \in$ REQUESTED_DGS:

$$\xleftarrow[K_{ENC}^{SM}, K_{AUTH}^{SM}]{DG_i}$$

$DGC_i \leftarrow$ read$(EF_{DG_i})$

$DGC_i^{ENC} \leftarrow$ Encrypt$(K_{ENC}^{DGE}, DGC_i)$

$DGC_i^{AUTH} \leftarrow$ MAC$(K_{Auth}^{DGE}, DGC_i^{ENC})$

$cxt \leftarrow cxt \cup \{DGC_i\}$

$$\xrightarrow[K_{ENC}^{SM}, K_{AUTH}^{SM}]{DGC_i^{ENC}, DGC_i^{AUTH}}$$

$dgcs \leftarrow dgcs \cup \{(DGC_i^{ENC}, DGC_i^{AUTH})\}$

$$\xleftarrow[K_{ENC}^{SM}, K_{AUTH}^{SM}]{PK_{SP}^{RI}, D}$$

$ID_{RID} \leftarrow$ H$(KA(SK_{CARD}^{RI\_ID}, PK_{SP}^{RI}, D))$

$ID_{RID}^{ENC} \leftarrow$ Encrypt$(K_{ENC}^{DGE}, ID_{RID})$

$ID_{RID}^{AUTH} \leftarrow$ MAC$(K_{AUTH}^{DGE}, ID_{RID}^{ENC})$

$cxt \leftarrow cxt \cup \{ID_{RID}\}$

$$\xrightarrow[K_{ENC}^{SM}, K_{AUTH}^{SM}]{ID_{RID}^{ENC}, ID_{RID}^{AUTH}}$$

$rid \leftarrow (ID_{IDP}^{ENC}, ID_{RID}^{AUTH})$

(i)

# Fig. 2

38

| 10 | 12 | 14 |
|---|---|---|
| | | result $\leftarrow$ dgcs $\|$ rid <br><br> result_sig $\leftarrow$ Sign$(SK_{IDP}^{ESIG},result)$ <br><br> $\xleftarrow[id]{}$ dgcs, rid, result_sig |
| | Für $\forall$ (ciphertext, mac) $\in$ dgcs: <br><br> $DGC_j^{AUTH,} \leftarrow$ <br> MAC$(K_{AUTH}^{DGE}, ciphertext)$ <br> $DGC_j \leftarrow$ <br> Decrypt$(K_{ENC}^{DGE}, ciphertext)$ <br><br> cxt $\leftarrow$ cxt $\cup$ $\{DGC_j\}$ <br> $ID_{RID}^{AUTH,} \leftarrow$ <br> MAC$(K_{AUTH}^{DGE}, ID_{RID}^{ENC})$ <br><br> $ID_{RID} \leftarrow$ <br> Decrypt$(K_{ENC}^{DGE}, ID_{RID}^{ENC})$ <br><br> cxt $\leftarrow$ cxt $\cup$ $\{ID_{RID}\}$ | |
| xchg_auth $\leftarrow$ <br> MAC$(K_{AUTH}^{DGE}, cxt)$ <br><br> xchg_auth $\xrightarrow[id]{}$ | $\xleftarrow[id]{}$ authenticate_exchange () | xchg_auth $\leftarrow$ <br> MAC$(K_{AUTH}^{DGE}, cxt)$ |

(k)

# Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2008235513 A1